# EUROPÄISCHE PATENTSCHRIFT

(11) **EP 2 532 926 B1**
(45) Veröffentlichungstag und Bekanntmachung des Hinweises auf die Patenterteilung: **26.10.2016**
(21) Anmeldenummer: 11737345.6
(22) Anmeldetag: 21.01.2011
(51) Int. Cl.: F16H 55/08, F16H 1/08

(54) **EXZENTER-ZYKLOIDVERZAHNUNG**
ECCENTRICALLY CYCLOIDAL GEARING
ENGRENAGE EXCENTRIQUE ET CYCLOÏDAL

(30) Priorität: 01.02.2010 RU 2010103286
(43) Veröffentlichungstag der Anmeldung: 12.12.2012
(73) Patentinhaber: Closed Joint Stock Company "Technology Market", Tomsk 634021 (RU)
(72) Erfinder: STANOVSKOY, Viktor Vladimirovich, Tomsk 634063 (RU); KAZAKYAVICHYUS, Sergey Matveevich, Tomsk 634063 (RU); REMNEVA, Tatiana Andreevna, Tomsk 634028 (RU); KUZNETSOV, Vladimir Mikhajlovich, Tomsk 634063 (RU); STANOVSKOY, Alexandr Viktorovich, Tomsk 634063 (RU)
(74) Vertreter: Sloboshanin, Sergej
(86) Internationale Anmeldenummer: PCT/RU2011/000027
(87) Internationale Veröffentlichungsnummer: WO 2011/093744

(56) Entgegenhaltungen:
- WO-A1-2009/008767
- CH-A5- 657 434
- CN-A- 101 328 967
- DE-B- 1 210 644
- RU-C1- 2 338 105
- SU-A1- 1 060 835
- US-A- 2 321 696
- US-A- 4 858 487

## Beschreibung

Die Erfindung betrifft eine Exzenter-Zykloidenverzahnung von Zahnprofilen mit Kurvenzähnen nach dem Oberbegriff des Anspruchs 1.

Die Erfindung ist bei mechanischen Getrieben zur Umwandlung der Drehbewegung in eine Dreh- bzw. Vorwärts-/Rückwärtsbewegung einsetzbar, bei denen der Zahneingriff der Profile ausgenutzt wird. Die Erfindung kann bei Stirnradgetrieben, Kegelradgetrieben und Planetengetrieben sowie bei Zahnstangenantrieben Anwendung finden. Die Getriebe verfügen über eine hohe Übersetzung, geringe Abmessungen und eine hohe Belastungsfähigkeit.

Die bei Zahnradgetrieben oft angewendete Evolventenverzahnung der Zahnräder hat bei all ihren Vorzügen eine geringe Belastungsfähigkeit, die durch die Abmessungen der Zähne begrenzt und auch hinsichtlich der Übersetzungszahl pro Getriebestufe eingeschränkt ist. Normalerweise ist die Übersetzung eines einstufigen Getriebes nicht größer als 7. Um die Leistungsfähigkeit der Evolventenverzahnung zu erhöhen, muss der Modul der Zähne vergrößert werden. Dies führt zu einer nicht gerechtfertigten Vergrößerung der Abmessungen des Getriebes.

Bekannt ist die Novikov-Verzahnung (A. F. Kraynev. Getriebewörterbuch. M.: Maschinenbau, 1987, Seite 242), deren Zahnprofile einen Kontaktpunkt aufweisen, der sich im Betriebszustand auf einer Linie verschiebt, die parallel zu den Achsen der Zahnräder verläuft. Diese Verzahnung hat konvex-konkave Schraubenzähne. Dazu sind die Zahnprofile des Rades und des Ritzels im Stirnschnitt durch Kreise mit unterschiedlichem Vorzeichen der Krümmung gebildet.

Der Koeffizient der Querschnittüberdeckung der Verzahnung ist gleich oder nahe Null. Ein gleichmäßiger Betrieb ist durch die Achsenüberdeckung erreicht, deren Koeffizient größer als 1 gewählt ist. Die Novikov-Verzahnung weist, verglichen mit der Evolventenverzahnung, eine doppelt so große Leistungsfähigkeit auf und besitzt einen höheren Wirkungsgrad. Im Unterschied zur Evolventenverzahnung reagiert sie sehr empfindlich auf eine Veränderung der Achsenabstände. Deshalb sind eine hohe Fertigungsgenauigkeit und eine erhöhte Festigkeit der Wellen und Lagerungen gefordert.

Bekannt ist eine Exzenter-Zykloidenverzahnung von Kurvenzahnrädern (s. Stanovskoy V.V., Kazakyavichius, S.M. etc. Neue Art der Verzahnung der Räder mit schraubenförmigen Zähnen. Handbuch. Inzhenerny zhournal Nr. 9, 2008. S. 34-39). Das kleinere Zahnrad weist insgesamt einen einzigen schraubenförmigen Zahn auf, dessen Profil im Stirnschnitt einen Kreis darstellt. Der Kreis ist zur Drehachse des Zahnrades exzentrisch verschoben. Das kurven- und schraubenförmige Zahnprofil des Zahnrades ist durch schrittweise und kontinuierliche Verschiebung dieses Kreisprofils entlang der Achse des Zahnrades mit seiner gleichzeitigen Drehung um diese Achse gebildet. Das Profil des größeren Zahnrades greift im Stirnschnitt in den exzentrisch verschobenen Kreis des Ritzels ein. Das Profil ist als Grenzfläche der exzentrischen Kreise in verschiedenen Verzahnungsphasen konstruiert und stellt eine zykloidenartige Kurve dar, die die Äquidistante der Epitrochoiden für die Außenverzahnung ist. Die kurven- und schraubenförmige Zahnfläche der Zähne des zweiten Rades ist analog durch die schrittweise und kontinuierliche Drehung der Zykloiden-Stirnschnitte um die Zahnradachse gebildet. Diese Verzahnung ist für Stirnräder oder Kegelräder oder bei Zahnstangen einsetzbar. Bei der Verzahnung von Kegelrädern haben die Zähne die oben beschriebene Form in den Schnitten durch einen Ergänzungskegel oder in den Schnitten durch eine Kugel mit dem Zentrum im Schnittpunkt der Zahnradachsen. Den Schnitt durch einen Ergänzungskegel für die Kegelräder und den Stirnschnitt für die Stirnräder kann man durch einen einzigen verallgemeinerten Begriff definieren - den Hauptschnitt.

Die Zahnflanken der Zahnräder greifen bei jedem Stirnschnitt ein und weisen gleichzeitig eine Vielzahl von Berührungspunkten auf. Diese Berührungspunkte bilden eine kontinuierliche schraubenförmige Kontaktlinie. In jedem beliebigen Stirnschnitt einer Verzahnung erfolgt der Kraftschluss der Flanken in dem Abschnitt, der kleiner als die Hälfte der Umdrehung des schraubenförmigen Exzenters ist. Folglich ist der Koeffizient der Stirnüberdeckung kleiner oder gleich 1/2. Zur Erreichung einer gleichmäßigen Wirkung des Getriebes ist der Koeffizient der Achsenüberdeckung größer als 1/2 zu wählen. Diese Werte sind für eine ideale Verzahnung gerechtfertigt. In der Praxis wählt man aufgrund von Fertigungsfehlern den Koeffizienten der Achsenüberdeckung gleich oder größer als 1, und der Winkel der Achsenüberdeckung beträgt 360 Grad. Die Verzahnung verfügt über eine hohe Übersetzung, einen hohen Wirkungsgrad und eine hohe Belastungsfähigkeit. Die Verzahnung reagiert weniger anfällig auf eine Veränderung des Achsenabstands als die Evolventenverzahnung, da sie bei gleichen Übersetzungszahlen oder gleichen Abmessungen eine größere Zahnhöhe hat.

Da diese Verzahnung eine Schrägverzahnung ist, gibt es für sie eine Einschränkung des maximalen Neigungswinkels der Zähne, die durch die GOST mit 45 Grad festgelegt ist. Bei diesem Neigungswinkel sind, um einen Achsenüberdeckungswinkel von 360 Grad zu erreichen, die Achsmaße des Getriebes zu erhöhen. Dies ist nicht immer zulässig. Die angeführte Verzahnung wählen wir als Prototyp.

Durch CN 101328967 ist eine Verzahnung von Zahnprofilen bekannt, die sich durch einen vollständig gegenseitig abrollenden Eingriff auszeichnet. Hierzu sind die Verzahnungen der Zahnprofile aller miteinander in Eingriff stehenden Räder als Zykloidenverzahnungen ausgeführt. Damit weisen die Verzahnungen der Zahnprofile aller miteinander in Eingriff stehenden Räder eine Zykloidenform auf. Die Verzahnungen der miteinander in Eingriff stehenden Räder sind damit beide in Form einer Rollkurve ausgebildet. Bei der Verzahnung von Zahnprofilen handelt es sich um eine Zykloiden-Zykloidenverzahnung, da die Zahnprofile aller miteinander in Eingriff stehenden Räder als Zykloidenverzahnung ausgeführt sind. Das kleinere Rad der Zykloiden-Zykloidenverzahnung weist mindestens zwei Zähen auf. Die Arbeitsflächen jedes Zahns des kleineren Zahnrads des ersten Profils sind im Hauptschnitt durch eine Rollkurve gebildet. Die Zähne des kleineren Rads stellen eine Hypozykloide dar, welche ein Punkt des Rollkreises bei seinem Rollen ohne Gleiten innerhalb des Teilkreises umreißt.

Es ist Aufgabe der Erfindung, ein Getriebe mit geringen Abmessungen, hoher Belastungsfähigkeit und hohem Wirkungsgrad zu schaffen, das auf Ungenauigkeiten der Achsenabstände wenig auffällig reagiert.

Die gestellte Aufgabe wird durch die Merkmale des Anspruchs 1 gelöst.

Das technische Ergebnis besteht in einer Verkleinerung des Winkels der Achsenüberdeckung und der Achsenabmessungen der Verzahnung. Ein zusätzliches technisches Ergebnis, das bei einigen Verzahnungsvarianten erreichbar ist, ist eine Verringerung der Fläche, die eine genaue Bearbeitung erfordert. Um das genannte Ergebnis bei einer Exzenter-Zykloidenverzahnung von Zahnprofilen mit Kurvenzähnen zu erreichen, stellt eines der Profile ein Zahnrad mit mindestens zwei schraubenförmigen Zähnen dar. Die seitlichen Arbeitsflächen jedes Zahnes dieses Zahnrades sind in jedem beliebigen Hauptschnitt durch Bögen eines exzentrisch verschobenen Kreises gebildet. Die Arbeitsflächen der Zähne des zweiten Profils in dem gleichen Hauptschnitt sind von den Abschnitten zykloidaler Kurven gebildet, die in die Zähne des Zahnrades des ersten Profils eingreifen. Die Zahnspitzen und Zahnlücken beider Profile können eine beliebige Form aufweisen unter der einzigen Bedingung, dass sie sich im Betriebszustand nicht überschneiden.

Insbesondere sind die schraubenförmigen Zähne des ersten Profils im Hauptschnitt komplett durch die exzentrisch verschobenen Kreise gebildet. Dann sind die Zähne des zweiten Profils im gleichen Hauptschnitt durch Abschnitte der sich überschneidenden zykloidalen Kurven gebildet, die mit den Zähnen des ersten Zahnrades gekoppelt sind. Diese zykloidalen Kurven sind Äquidistante der Zykloiden, die zu einander um einen Winkel verdreht sind, der einem Teilwinkel der Zykloide geteilt durch die Anzahl der Zähne des Zahnrades gleich ist. Es ist anzumerken, dass die Verzahnung, deren Zähne vollkommen durch die Bögen des exzentrischen Kreises und die sich überschneidenden zykloidalen Kurven gebildet sind, einen viel höheren Zeitaufwand für die Bearbeitung erfordern, da sich die Flächen, die eine schwierige geometrische Form haben, beträchtlich erhöhen.

Die angeführte Verzahnung ist in Verzahnungen verschiedener Typen realisierbar (Außen- und Innenverzahnung), für Zahnräder unterschiedlicher Form (Stirnräder und Kegelräder) und auch als Zahnstangenverzahnung.

Für die Stirnräder sind die Hauptschnitte von Zahnrädern deren Stirnschnitte. Für die Zahnstangenverzahnung ist der Hauptschnitt ein Querschnitt durch die Ebene, die rechtwinklig zur Achse des Zahnrades und parallel zur Zahnstange verläuft. Für die Verzahnung von Kegelrädern sind die Hauptschnitte Querschnitte durch einen Ergänzungskegel.

Für eine Kegelverzahnung ist auch eine andere Modifikation möglich, wenn die Zähne die oben beschriebene Form in den Querschnitten durch die Kugel mit dem Zentrum im Überschneidungspunkt der Achsen der Zahnräder haben. D. h., die Arbeitsbereiche jedes Zahns des ersten Zahnrades in diesem Kugelschnitt sind durch die Bögen der exzentrisch verschobenen Kreise gebildet. Die Flächen der Zähne des zweiten Zahnrades in dem gleichen Kugelschnitt sind durch die Bereiche der zykloidalen Kurven gebildet, die in die Zähne des Zahnrades eingreifen. Oder, mit anderen Worten, die Zahnprofile im Hauptschnitt sind die Bögen der exzentrisch verschobenen Kreise, die auf einer Kugel ausgebildet und die Bereiche der zykloidalen Kurven sind. Wenn der Radius des exzentrischen Kreises, der die Zähne des ersten Zahnrades bildet, größer als dessen Exzentrizität ist, dann wird der Zahn durch die Überschneidung dieser Kreise gebildet. Wenn die exzentrische Verschiebung des Kreises größer ist als ihr Radius, dann ist der Zahn ein Zylinder mit einem bestimmten Radius, dessen Größe ausgehend von der erforderlichen Belastungsfähigkeit des Zahnrades gewählt ist. In diesem Falle müssen im Profil des zweiten Zahnrades die Spitzen der schraubenförmigen Zähne, die von den zykloidalen Kurven gebildet sind, bis auf eine Größe abgeschnitten werden, die gewährleistet, dass keine Überschneidung der Zähne mit dem ersten Zahnrad auftritt.

Die Erfindung wird anhand der Zeichnungen näher erläutert. Es zeigen:
- Fig. 1:: die Gesamtansicht des Stirnrades mit zwei schraubenförmigen exzentrischen Zähnen, wobei die Exzentrizität des Kreises, der die Zähne bildet, kleiner ist als sein Radius,
- Fig. 2:: eine Gesamtansicht einer Außenverzahnung, die durch dieses Zahnrad gebildet ist,
- Fig. 3:: den Stirnschnitt dieser Verzahnung,
- Fig. 4 und 5:: eine Gesamtansicht und einen Stirnschnitt der Außenstirnradverzahnung eines zweizahnigen Zahnrades mit exzentrischen schraubenförmigen Zähnen, bei dem der Kreis, der diese Zähne bildet, eine Exzentritzität hat, die gleich seinem Radius ist,
- Fig. 6 und 7:: eine Verzahnung von ähnlichen Zahnrädern, bei denen nur die Arbeitsbereiche der Zähne eine bestimmte der Erfindung entsprechende Form haben,
- Fig. 8:: eine Gesamtansicht eines Stirnrades mit drei exzentrischen Zähnen,
- Fig. 9:: den Stirnschnitt der Außenverzahnung von Zahnrädern, die durch dieses Zahnrad gebildet sind,
- Fig. 10:: eine Gesamtansicht der Verzahnung des Stirnrades mit drei Zähnen, bei dem nur die seitlichen Bereiche der Zähne die Form exzentrisch verschobener Kreise haben, und die Zahnspitzen und die Zahnlücken durch die zylindrischen Flächen unterschiedlicher Radien mit den Achsen gebildet sind, die mit der Drehachse des Zahnrades zusammenfallen,
- Fig. 11:: den Stirnschnitt der Außenverzahnung mit diesem Zahnrad,
- Fig. 12:: die Gesamtansicht der vorgeschlagenen Verzahnung für zwei Varianten von Kegelrädern und
- Fig. 13:: eine Zeichnung zur Gestaltung von Zahnprofilen für Kegelräder im Kugelschnitt der Verzahnung.

In den Zeichnungen sind keine Varianten für eine Innenverzahnung von Stirnrädern und Zahnstangen dargestellt, die entsprechend der vorgeschlagenen Erfindung ausgeführt sind. Die Innenverzahnung unterscheidet sich nur dadurch von der Außenverzahnung, dass die Zähne des Rollprofils auf der zylindrischen Innenfläche verlaufen. Die Zahnstange ist ein Spezialfall einer Verzahnung von Stirnrädern, wenn der Radius des größeren Zahnrades unendlich groß ist.

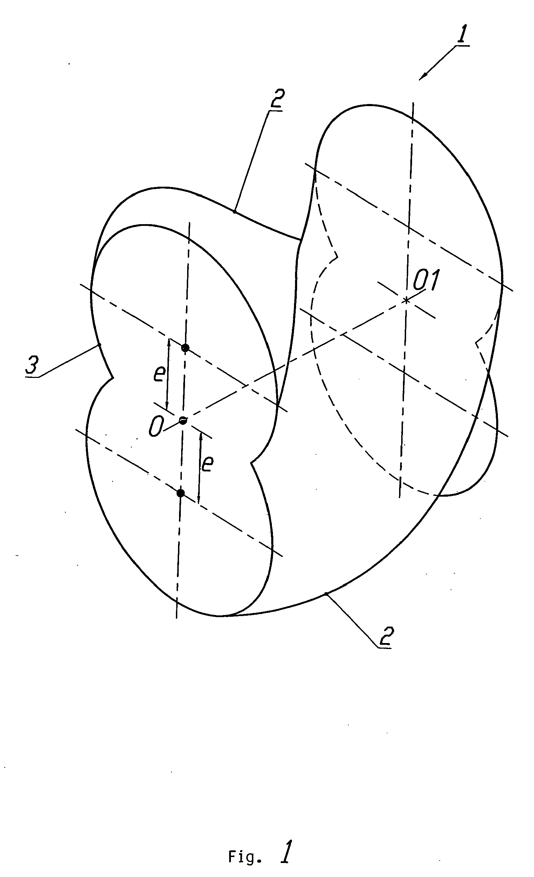

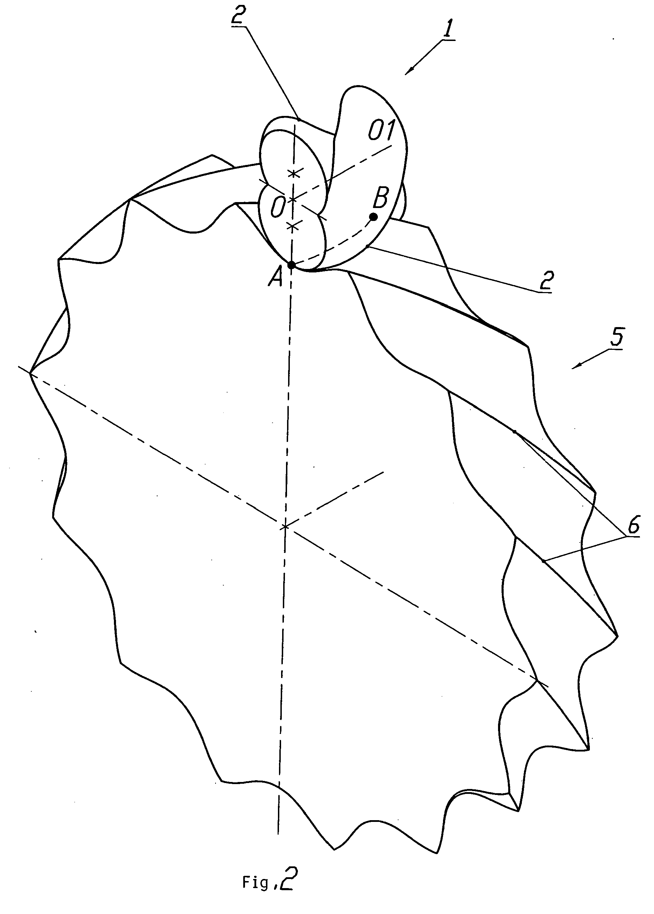

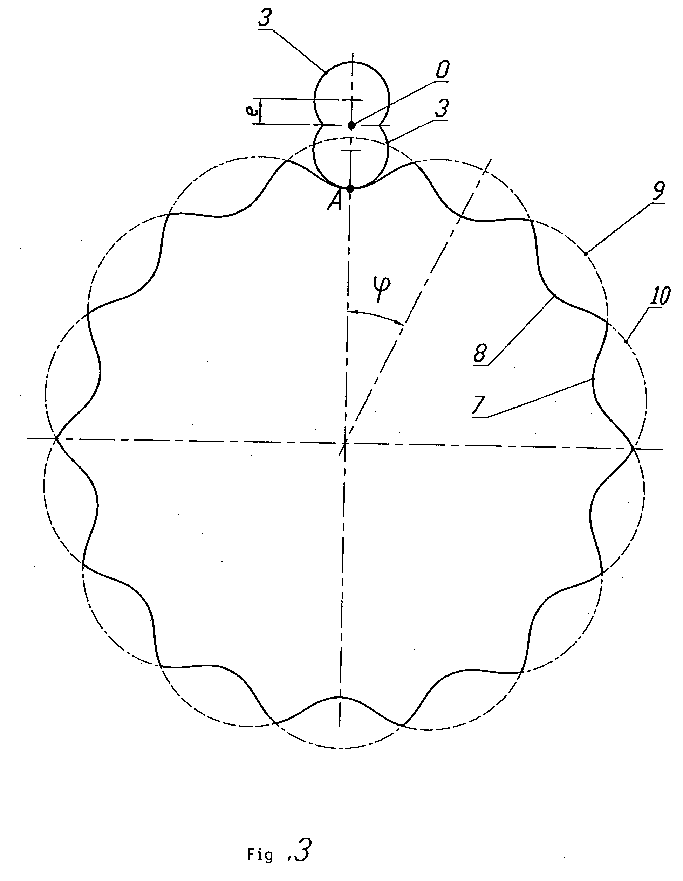

Betrachten wir die Verzahnung der Zahnprofile, die in den Fig. 1, 2 und 3 dargestellt sind.

Eines der Profile zeigt ein Zahnrad 1 mit zwei schraubenförmigen Zähnen 2. Jeder Zahn in einem beliebigen Hauptschnitt, der bei den Stirnrädern ein Stirnschnitt ist, hat einen Kreis 3, der hinsichtlich der Drehachse 001 des Zahnrades 1 um eine Größe "e" exzentrisch verschoben ist. Die schraubenförmigen Zähne 2 des Zahnrades 1 sind durch ein kontinuierliches Drehen dieser Kreise hinsichtlich der Achse 001 und eine gleichzeitige kontinuierliche Verschiebung entlang dieser Achse 001 gebildet. Der Zahnkranz wird durch Überschneidung dieser zwei schraubenförmigen Exzenter gebildet. Im Vergleich zum Prototyp, dem einzahnigen Schraubenexzenter, und gemäß der Analogie mit einer Schnecken-Verzahnung kann man sagen, dass die Zähne dieses Zahnrades mit einem zweigängigen schraubenförmigen Exzenter ausgeführt sind. Das zweite Zahnprofil in der Verzahnung ist ein Zahnrad 5 mit schraubenförmigen Zähnen 6. Die Zähne 6 sind in den Stirnschnitten durch die Bereiche 7 und 8 der zykloidalen Kurven 9 und 10 gebildet, die in die Zähne des Zahnrades 1 eingreifen. Die zykloidalen Kurven 9 und 10 stellen eine Äquidistante mit derselben Zykloide dar, sind aber gegeneinander um einen Winkel verdreht, der gleich dem Teilwinkel der Zykloide ist, geteilt durch die Anzahl der Zähne des kleineren Zahnrades 1. Im vorliegenden Fall ist der Teilwinkel gleich 360/7 Grad, und die Kurven 9 und 10 sind zueinander um einen Winkel cp=360/7/2∼25,7 Grad verschoben.

Unter dieser Voraussetzung der Gestaltung der schraubenförmigen Zähne 2 und 6 haben diese in jedem Stirnschnitt einen Berührungspunkt, der entlang des schraubenförmigen Zahnes eine ununterbrochene Kontaktlinie AB bildet. Hier ist anzumerken, dass gerade die ununterbrochene Kontaktlinie in einer idealen theoretischen Verzahnung vorhanden ist und sich prinzipiell von der Novikov-Verzahnung unterscheidet, bei der die Profile theoretisch einen einzigen Berührungspunkt aufweisen.

Wie unsere Forschungen zeigten, verwandelt sich die Kontaktlinie bei der tatsächlichen Ausführung der neuen Verzahnung und Abweichungen des Mittenabstands vom berechneten Abstand in den Kontaktpunkt, der sich beim Arbeiten der Verzahnung entlang einer geraden Linie verschiebt, die parallel der Zahnradachse verläuft. Wobei sich, in Abhängigkeit von der Größe der Abweichung des Mittenabstands vom berechneten Abstand, diese Linie in der Höhe des Zykloidenzahns um einen relativ kleinen Wert verschiebt. Im Endeffekt ist die neue Verzahnung sogar weniger abhängig von den Ungenauigkeiten des Mittenabstands, als die Evolventenverzahnung. Dies ist dadurch bedingt, dass die Zahnhöhe bei der neuen Verzahnung größer ist. Im Vergleich zum Prototyp, der einzahnigen Exzenter-Zykloidenverzahnung, ist bei ein und demselben Neigungswinkel des schraubenförmigen Zahns die neue Verzahnung halb so groß wie ihre Länge, und folglich weist das Getriebe eine halb so große Achsabmessung auf. Tatsächlich muss für einen gleichmäßigen und kontinuierlichen Betrieb der Winkel der Achsenüberdeckung größer als 180 Grad sein. Bei der beschriebenen Verzahnung ist dieser Winkel um so viel kleiner, wie das Zahnrad mit den schraubenförmigen Exzenterzähnen Zähne hat. Für die Verzahnung mit 2 Zähnen in den Fig. 1, 2 und 3 ist die Achslänge des Getriebes halb so groß wie beim Prototyp. Tatsächlich muss man die Zahl der Zykloidenzähne des zweiten Profils verdoppeln, um die gleiche Getriebeübersetzung zu erreichen, wodurch die Radialabmessungen des Getriebes etwas größer werden.

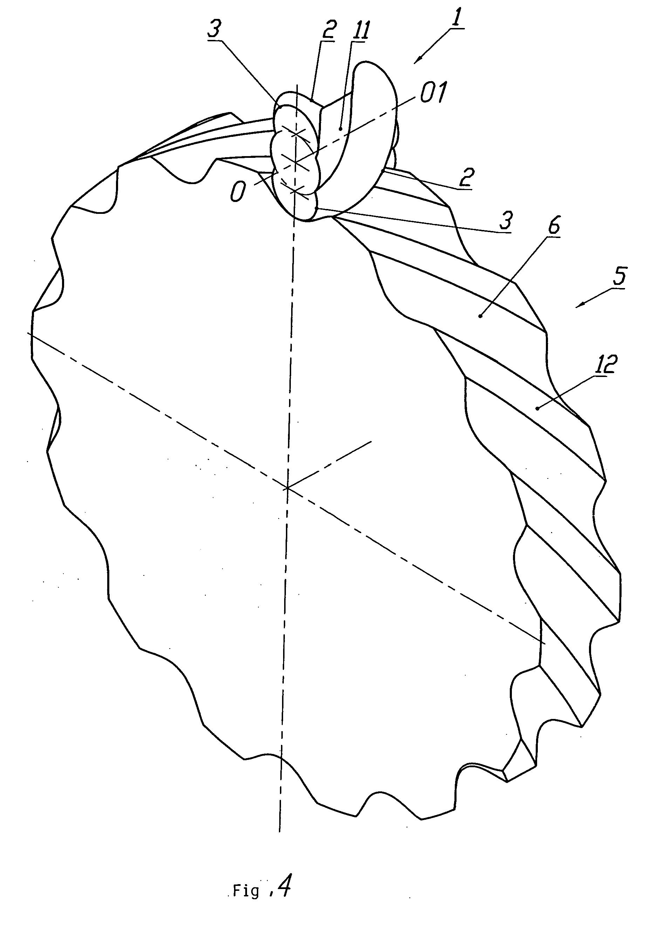

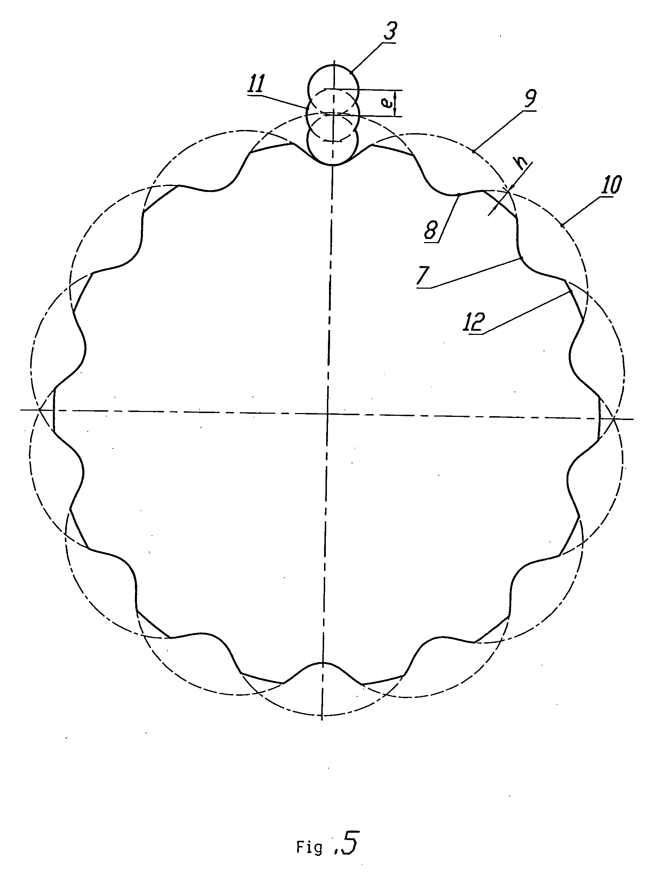

Bei den Fig. 4 und 5 ist eine Verzahnung dargestellt, bei der die Exzentrizität "e" des Kreises 3, der die Zähne des Zahnrades 1 bildet, gleich seinem Radius ist. In diesem Falle dient als Zahnradkörper die zylindrische Fläche 11, deren Radius ausgehend von den Festigkeitsanforderungen ausgewählt ist. Auf den Zeichnungen wurde der Radius der zylindrischen Fläche 11 gleich dem Radius des Exzenterkreises 3 gewählt, der die Zähne des ersten Profils bildet.

Die schraubenförmigen Zähne 6 des zweiten Profils 5 sind ebenfalls durch die Bereiche 7 und 8 der zwei zykloidalen Kurven 9 und 10 gebildet. Damit jedoch keine Überschneidung mit der Fläche des Zylinders 11 auftritt, der den Körper des Zahnrads 1 bildet, sind die Spitzen jedes schraubenförmigen Zykloidenzahns 6 abgeschnitten, wodurch Schraubenbereiche 12 der zylindrischen Fläche 11 gebildet sind. Die Schneidhöhe "h" ist so zu wählen, dass während eines Zahneingriffs keine Überschneidung des Zahnprofils mit der zylindrischen Fläche 11 des Zahnradkörpers auftritt.

Wie ein mathematisches Computermodellieren der neuen Verzahnung zeigt, erfolgt der Kraftschluss in der Verzahnung nur in den Frontabschnitten der Rollkurve. Dabei beeinflusst die Veränderung des Mittenabstands der Zahnräder innerhalb der durch die GOST für eine Evolventenverzahnung festgelegten Bereiche die Lage des Berührungspunkts auf dem Abschnitt dieser Front nur sehr wenig. Die Eingriffslinie verschiebt sich in der Höhe der Zähne insgesamt nur um ein paar Prozent in Bezug auf die Höhe des Zahns. Daraus ist die Schlussfolgerung zu ziehen, dass die restlichen Profilabschnitte der Räder eine beliebige sich nicht überschneidende Form haben können. Diese Tatsache gestattet es, die Herstellungstechnologie der Zahnräder beträchtlich zu vereinfachen und billiger zu machen, da nur flächenmäßig kleine Abschnitte einer genauen Bearbeitung unterzogen werden müssen.

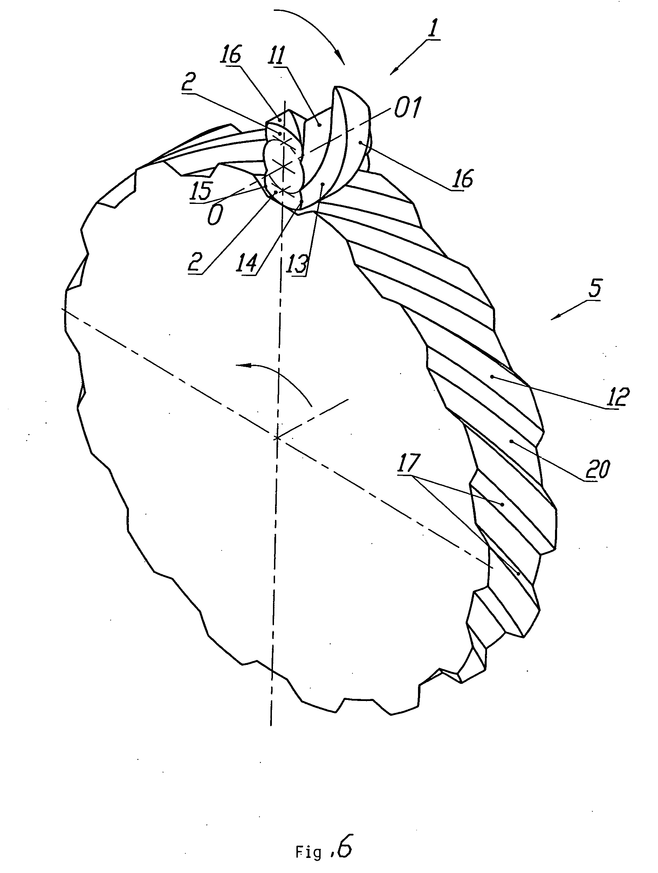

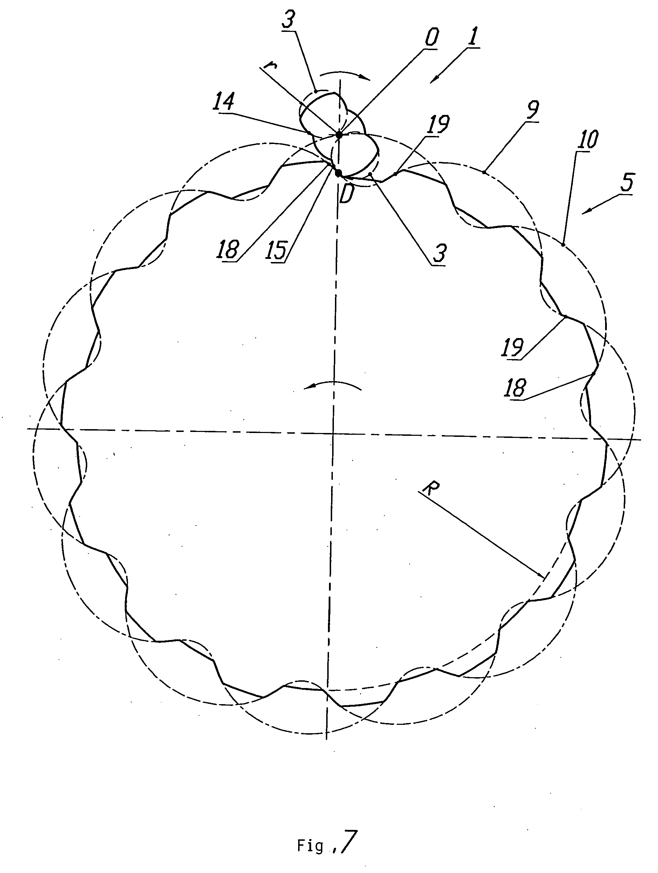

In den Fig. 6 und 7 ist eine Variante einer solchen Verzahnung gezeigt. Das Zahnrad 1 des ersten Profils hat zwei schraubenförmige Zähne 2. Die seitlichen Arbeitsflächen 13 jedes dieser Zähne 2 sind im Stirnschnitt durch die Bögen 14 und 15 des exzentrischen Kreises 3 gebildet. Die am weitesten von der Drehmitte des Zahnrades 1 entfernten Bögen dieser Kreise 3 sind abgeschnitten und bilden in den dreidimensional schraubenförmigen Zähnen schraubenförmige Abschnitte 16, die die Form einer zylindrischen Fläche mit dem Radius r haben. Der Zahnradkörper ist, wie im vorhergehenden Fall, von der zylindrischen Fläche 11 gebildet. Das Zahnrad 5 des zweiten Profils weist schraubenförmige Zähne auf, deren Arbeitsbereiche 17 im Stirnschnitt mit den Fronten 18 und 19 der Rollkurven 9 und 10 gebildet sind. Die Zahnlücken zwischen den Zähnen stellen die schraubenförmigen Abschnitte 20 der zylindrischen Fläche des Radius R dar. Die Radien R und r sind so zu wählen, dass ihre Summe kleiner ist als der Mittenabstand der Zahnräder 1 und 5. In diesem Falle findet keine Überschneidung der Profile statt.

Wie bei der vorhergehenden Variante sind die Zähne auch abgeschnitten, um zu gewährleisten, dass sich die Zähne nicht mit den Zahnspitzen des Zahnrades 1 der Zykloidzähne überschneiden. Sie bilden die schraubenförmig gewundenen Abschnitte der zylindrischen Fläche 12. Im Ergebnis dieser Profilmodifikation sind nur die Arbeitsbereiche 13 der Zähne des Zahnrades 1 und der Bereich 17 des Zahnrades 5 genau zu bearbeiten. Hier ist anzumerken, dass die Flächen der Zahnspitzen und Zahnlücken von ineinander greifenden Profilen eine beliebige sich nicht überschneidende Form haben können. Insbesondere können das Flächen sein, die durch Exzenterkreise für ein Zahnrad-Ritzel und die Rollkurven des Zahnrades 5 gebildet sind. D. h. in den Hauptschnitten sind die Profile von ineinander greifenden Zähnen komplett durch die Exzenterkreise und die Abschnitte der sich überschneidenden Rollkurven gebildet.

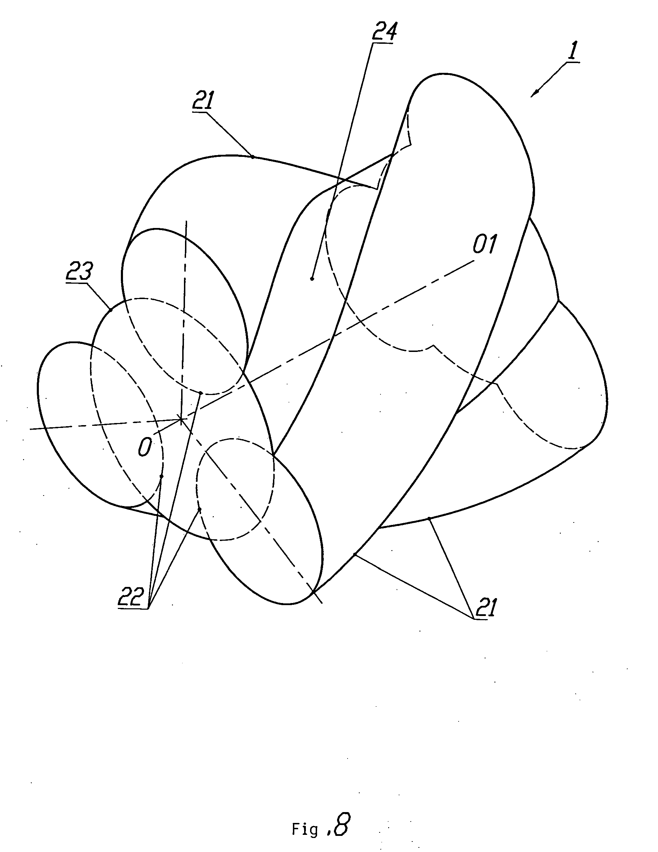

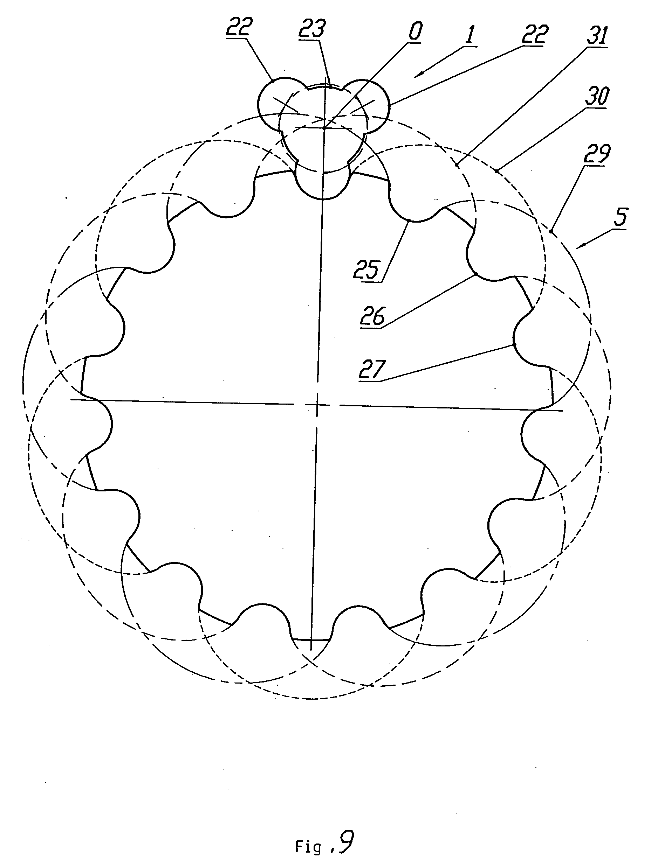

Wenden wir uns der Verzahnung zu, bei der das Zahnrad 1 des ersten Profils drei schraubenförmige Zähne 21 hat (s. Fig. 8 und 9). Diese Zähne 21 sind im Stirnschnitt des Zahnrades 1 durch drei exzentrisch von der Drehmitte des Zahnrades 1 verschobene Kreise 22 gebildet. In den Fig. 8 und 9 ist ein Fall dargestellt, bei dem die Exzentrizität der Kreise 22 größer als deren Radius ist. Im Stirnschnitt sind die Kreise durch die Bögen des Kreises 23 verbunden, der den zylindrischen Körper 24 des Zahnrads 1 bildet. Der Radius dieses Zylinders 24 ist aus den Gründen der Festigkeitsbedingungen des Zahnrades 1 gewählt. Das zweite eingreifende Profil ist das Zahnrad 5. Seine schraubenförmigen Zähne sind im Stirnschnitt durch die Abschnitte 25, 26 und 27 der Rollkurven 29, 30 bzw. 31 gebildet. Die Kurven 29 bis 31 stellen im Wesentlichen eine Abstandslinie ein und derselben Zykloide dar, die um einen Phasenwinkel verschoben ist, der gleich dem Teilwinkel der Zykloide, geteilt durch die Anzahl der Zähne des Exzenterrades 1, ist. Die Spitzen der Zykloidzähne wurden um einen Wert abgeschnitten, der gewährleistet, dass das Zahnrad 1 sich nicht mit dem Körper 24 des Rades 1 überschneidet.

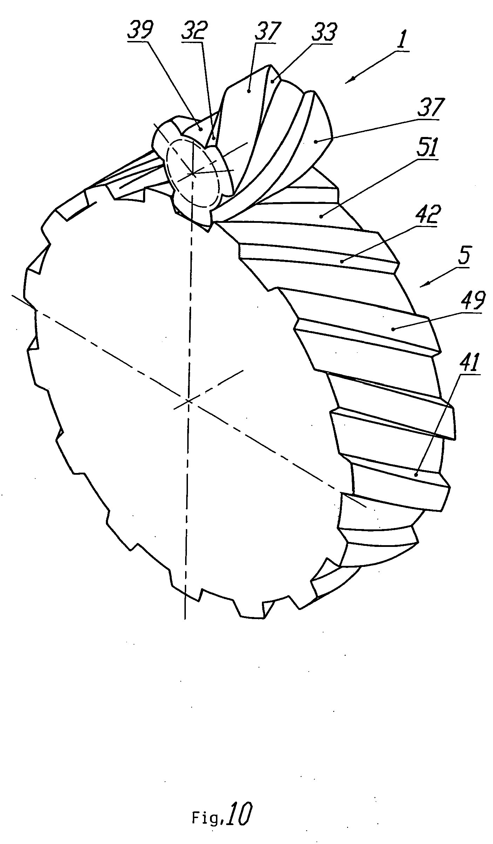

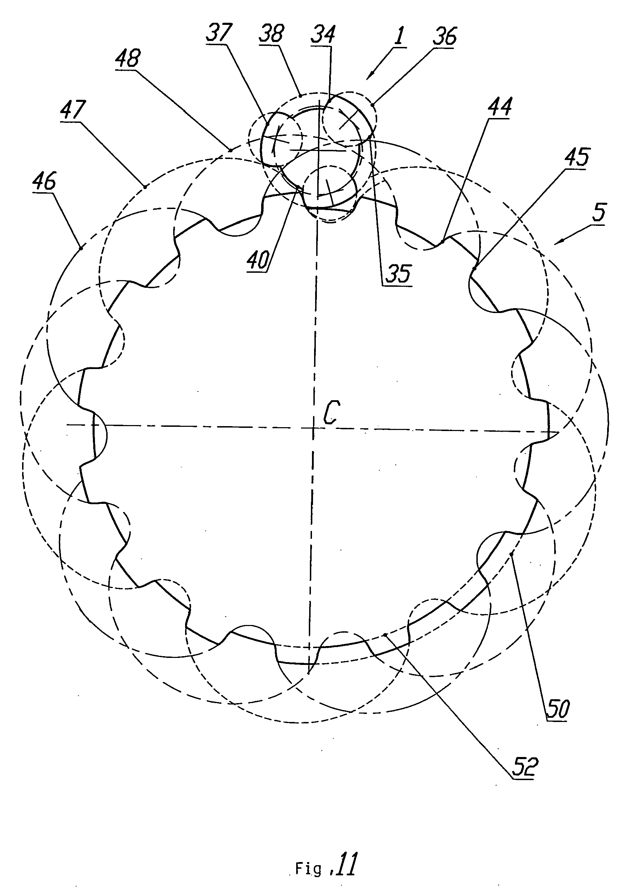

Bei der in den Fig. 10 und 11 dargestellten Verzahnung weist das Zahnrad 1 des ersten Profils drei schraubenförmig gewundene Zähne auf. Im Unterschied zur Verzahnung in den vorherigen Fig. 8 und 9 sind die Zähne dieser Verzahnung folgendermaßen modifiziert. Die seitlichen Arbeitsbereiche 32 und 33 jedes Zahns im Hauptschnitt, der bei der vorliegenden Verzahnung der Stirnräder ein Stirnschnitt ist, sind als Bögen 34 und 35 der Kreise 36 ausgebildet, die hinsichtlich der Drehachse des Zahnrades 1 exzentrisch verschoben sind. Die Zahnspitzen 37 haben die Form von schraubenförmigen Abschnitten zylindrischer Flächen, die im Stirnschnitt durch den Kreis 38 dargestellt sind. Die Zahnlücken zwischen den Zähnen sind ebenfalls schraubenförmige Abschnitte 39 der zylindrischen Fläche, die im Stirnschnitt durch den Kreisbogen 40 dargestellt sind.

Das Zahnrad 5 weist schraubenförmig gewundene Zähne auf, deren schraubenförmige Arbeitsflächen 41 und 42 im Stirnschnitt als Frontabschnitte 44 und 45 der Rollkurven 46, 47 und 48 ausgebildet sind. Diese Kurven sind die Äquidistanten der Zykloiden, die zueinander um einen Winkel verdreht sind, der gleich dem Teilwinkel des Zahnrades 5, geteilt durch die Anzahl der Zähne des Zahnrades 1, ist. Im vorliegenden Falle beträgt dieser Winkel ca. 5,71 Grad. Die Zahnspitzen des Zahnrades 5 sind die schraubenförmigen Abschnitte 49 der zylindrischen Fläche, die im Stirnschnitt durch den Kreis 50 dargestellt ist. Somit stellen die Zahnlücken die schraubenförmigen Abschnitte 51 der zylindrischen Fläche dar, die im Stirnschnitt durch den Kreis 52 dargestellt ist. Hier ist anzumerken, dass, wie auch bei der Zweizahnverzahnung in den Fig. 6 und 7, die Flächen der Zahnspitzen und Zahnlücken der ineinander greifenden Profile eine beliebige, sich nicht überschneidende Form haben können. Das können insbesondere Flächen sein, die durch die exzentrischen Kreise für das Zahnrad 1 und die Rollkurven für das Zahnrad 5 gebildet sind.

Jetzt wird die Verzahnungsvariante mit Kegelrädern betrachtet. Bei einer der Varianten sind die Verzahnungsprofile genau so gebildet, wie es oben für die Stirnräder beschrieben ist, nur ist in diesem Falle der Querschnitt durch einen Ergänzungskegel der Hauptschnitt. Und zwar sind in diesem Schnitt die Zahnprofile eines Zahnrades durch Bögen der exzentrischen Kreise gebildet. Die Zahnprofile des anderen Zahnrades sind durch die Abschnitte der Rollkurven gebildet. Eine solche Verzahnung analog zur Evolventenverzahnung kann man als eine Quasi-EZ-Verzahnung von Kegelrädern bezeichnen (s. Kraynev A. F. Getriebewörterbuch. M.: Maschinenbau, 1987. Seite 166 ). In den Zeichnungen ist diese Verzahnungsvariante nicht dargestellt, da sich ihre Konstruktion nur wenig von der Konstruktion der Profile von Stirnrädern unterscheidet.

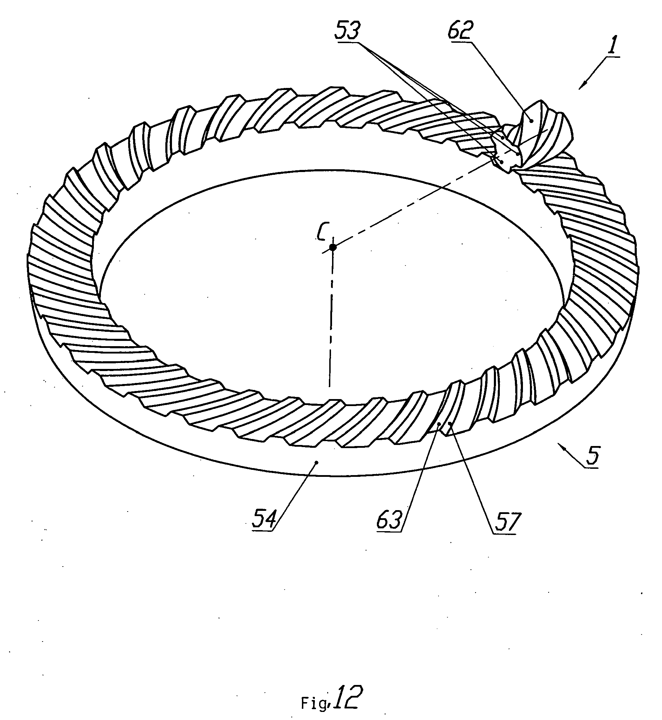

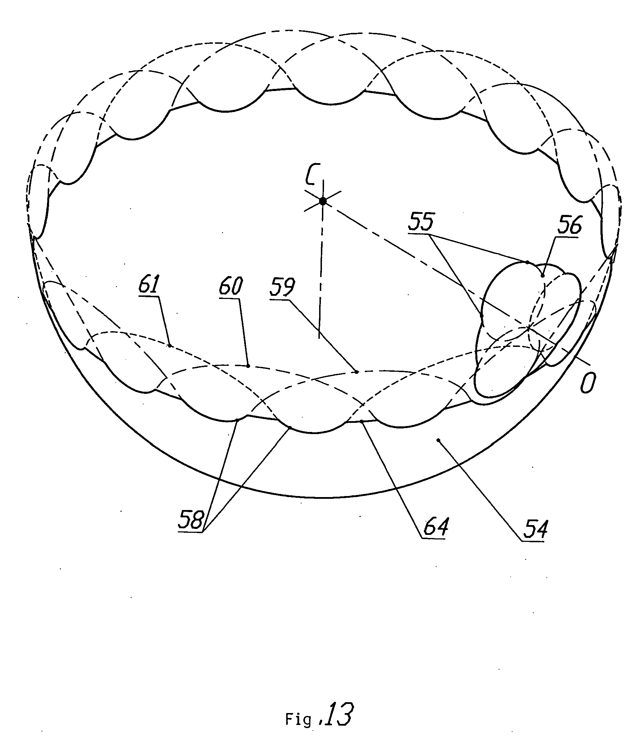

Für eine exaktere Konstruktion der Zahnprofile für eine Verzahnung von Kegelrädern sind die entsprechenden Profile im Querschnitt der Zahnräder durch eine kugelförmige Oberfläche konstruiert, wie das in den Fig. 12 und 13 gezeigt ist (Kugel-EZ-Verzahnung). Hier weist das Kegelrad 1 drei schraubenförmig gewundene Zähne 53 auf. Das Profil jedes dieser Zähne ist folgendermaßen gebildet: Es ist eine kugelförmige Fläche 54 mit einem Mittelpunkt C im Schnittpunkt der Achsen der Kegelräder 1 und 5 konstruiert. In einem beliebigen Schnitt des Zahnrades 1 durch eine solche Kugel sind die Arbeitsflächen der Zahnprofile durch die Bögen 55 des Kreises 56 gebildet, die von der Drehachse des Zahnrades 1 aus exzentrisch verschoben sind.

Die schraubenförmig gewundenen Zähne des Zahnrades 5 weisen die Arbeitsflächen 57 auf, die im Querschnitt durch eine beliebige solche Kugel durch die Frontabschnitte der Rollkurven 59, 60 und 61 gebildet sind, die auf dieser Kugel liegen, insbesondere auf der Kugel 54.

Die Zahnspitzen der Räder 1 und 5 können abgeschnitten sein und bilden die Schraubenflächen 62 und 63, wie in Fig. 12 gezeigt ist. Diese Flächen sind in den Kugelschnitten durch die Bögen 64 der konzentrischen Kreise gebildet, die auf der Kugel 54 liegen. Dazu ist anzumerken, dass in Fig. 13 die Bildung der Profile von Kegeleingriffsrädern gezeigt ist, bei denen nur die Spitzen der Zykloidzähne abgeschnitten sind. In Fig. 12 ist jedoch eine Verzahnung von Kegelrädern gezeigt, bei der die Zahnspitzen beider Profile abgeschnitten sind. Wie schon weiter oben gesagt, hat die Form des Zahns in den Bereichen außerhalb der Arbeitsflächen, d. h. die Form der Zahnspitze und der Zahnlücke zwischen den Zähnen, keine Bedeutung, und sie kann beliebig sein.

Die Funktion der neuen Verzahnung ist am Beispiel einer Verzahnung von Stirnrädern in den Fig. 6 und 7 gezeigt. Einer der schraubenförmig gewundenen Zähne des Zahnrades 1 hat einen Berührungspunkt D mit dem schraubenförmigen Profil des Zahnrades 5, das im Stirnschnitt der Zahnräder dargestellt ist. Das Zahnrad 1 soll sich um die Achse 001 drehen, z. B. in Uhrzeigerrichtung. Beim Drehen des Zahnrades 1 bewirken die mitarbeitenden Arbeitsbereiche 15 und 18 der Zahnprofile ein Drehen des Zahnrades 5 in entgegen gesetzter Richtung. Dann geraten die Zähne der Profile in dem in Fig. 7 gezeigten Schnitt außer Eingriff, aber der Berührungspunkt der Profile verlagert sich in den folgenden Schnitt, wo er auch die Drehung überträgt. Nach dem Drehen des Zahnrades 1 um eine halbe Drehung gerät der erste Zahn des Zahnrades 1 außer Eingriff, und in eben diesen Zahn des Zahnrades 5 greift der zweite Zahn ein. D. h. der Winkel der Achsüberschneidung kann halb so groß sein wie beim Zahnrad mit einem Zahn. Beim Drehen des Zahnrades 1 um eine volle Drehung dreht sich das Zahnrad 5 um einen Winkel, der gleich 360/(Z5/Z1) ist, wobei Z5 und Z1 die Anzahl der Zähne des Zahnrades 5 bzw. 1 sind. Die Übersetzung ist bestimmt durch Z5/Z1 und beträgt für die vorliegende Verzahnung Z5/2. Für eine reelle Verzahnung, d. h. für eine Verzahnung mit Abweichungen des Mittenabstands vom berechneten Abstand, existiert der Berührungspunkt der Räder 1 und 5 immer. Er kann sich nur in der Höhe des Zahnes und in der Position entlang der Radachse verschieben.

Alles oben Gesagte bezieht sich in gleichem Maße auch auf die Funktion anderer Varianten von Zahnradverzahnungen. Bei einer Zahnstange dreht sich das zweite Profil nicht, sondern verschiebt sich mit einer linearen Geschwindigkeit, die durch die Drehgeschwindigkeit des Zahnrades und die Übersetzungszahl bestimmt ist.

## Patentansprüche

1. Exzenter-Zykloidenverzahnung von zwei Zahnprofilen mit Kurvenzähnen, wobei:
- ein erstes der Zahnprofile ein Zahnrad (1) mit zwei schraubenförmigen Zähnen (2, 21, 53) darstellt,
- seitliche Arbeitsbereiche (13, 32, 33) jedes Zahnes (2, 21, 53) des Zahnrads (1) des erstens Zahnprofils in jedem beliebigen Hauptschnitt durch Bögen (14, 15, 34, 35, 55) eines hinsichtlich einer Drehachse (OO1) des Zahnrades (1) exzentrisch (e) verschobenen Kreises (3, 22, 36, 56) gebildet sind,
- Arbeitsflächen (17, 41, 42, 57) der Zähne (6) eines zweiten Zahnprofils in dem gleichen Hauptschnitt von Abschnitten (7, 8, 18, 19, 25, 26, 27, 44, 45) zykloidaler Kurven (9, 10, 29, 30, 31, 46, 47, 48) gebildet sind, die in die Zähne (2, 21, 53) des Zahnrades (1) des ersten Zahnprofils eingreifen.

## Claims

1. Eccentrically cycloidal gearing of two toothed profiles comprising curved teeth, wherein:
- a first of the toothed profiles is a gearwheel (1) comprising two helical teeth (2, 21,53),
- lateral operating regions (13, 32, 33) of each tooth (2, 21, 53) of the gearwheel (1) of the first toothed profile are formed in any desired main portion by arcs (14, 15, 34, 35, 55) of a circle (3, 22, 36, 56) that is shifted eccentrically (e) relative to a rotational axis (001) of the gearwheel (1),
- working surfaces (17, 41, 42, 57) of the teeth (6) of a second toothed profile in the same main portion are formed by portions (7, 8, 18, 19, 25, 26, 27, 44, 45) of cycloidal curves (9, 10, 29, 30, 31, 46, 47, 48) that engage in the teeth (2, 21, 53) of the gearwheel (1) of the first toothed profile.

## Revendications

1. Engrenage cycloïdal excentrique de deux profils de dents à dents courbes, dans lequel :
- un premier des profils de dents représente une roue dentée (1) avec deux dents hélicoïdales (2, 21, 53),
- les zones de travail latérales (13, 32, 33) de chaque dent (2, 21, 53) de la roue dentée (1) du premier profil de dents sont constituées dans une quelconque coupe principale par des arcs (14, 15, 34, 35, 55) d'un cercle (3, 22, 36, 56) excentré (e) par rapport à un axe de rotation (OO1) de la roue dentée (1),
- les surfaces de travail (17, 41, 42, 57) des dents (6) d'un deuxième profil de dents sont constituées dans la même coupe principale par des sections (7, 8, 18, 19, 25, 26, 27, 44, 45) de courbes cycloïdales (9, 10, 29, 30, 31, 46, 47, 48) qui s'engrènent dans les dents (2, 21, 53) de la roue dentée (1) du premier profil de dents.
